# EUROPÄISCHE PATENTSCHRIFT

(11) **EP 3 231 753 B1**
(45) Veröffentlichungstag und Bekanntmachung des Hinweises auf die Patenterteilung: **12.09.2018**
(21) Anmeldenummer: 16165173.2
(22) Anmeldetag: 13.04.2016
(51) Int. Cl.: B66B 1/34

(54) **AUFZUGSANLAGE MIT CODEABSCHNITTSMARKER**
ELEVATOR WITH CODE SECTION MARKER
ASCENSEUR AVEC MARQUEUR DE SÉQUENCE DE CODE

(43) Veröffentlichungstag der Anmeldung: 18.10.2017
(73) Patentinhaber: Cedes AG, 7302 Landquart (CH)
(72) Erfinder: ROHR, Stephan, 7204 Unetrvaz (CH); GIGER, Jan, 7233 Jenaz (CH)
(74) Vertreter: Otten, Roth, Dobler & Partner mbB Patentanwälte

(56) Entgegenhaltungen:
- EP-A1- 2 842 899
- EP-B1- 2 657 171
- DE-A1- 4 401 977
- US-A1- 2015 102 097
- Pepperl+Fuchs: "Reparaturband PCV-CR20", , 31. August 2012 (2012-08-31), XP055306089, Gefunden im Internet: URL:http://www.pepperl-fuchs.com/global/de /classid_2614.htm?&view=productdetails&pro did=53195 [gefunden am 2016-09-28]

## Beschreibung

Die Erfindung betrifft eine Aufzugsanlage mit einem Messband im Aufzugsschacht zur Positionsbestimmung der Aufzugskabine.

Aus dem Stand der Technik sind Aufzugsanlagen der genannten Art bekannt. So zeigt das Patent EP 2 657 171 B1 der Anmelderin eine Aufzugsanlage mit einem Messband zur Positionsbestimmung der Aufzugskabine bei dem ein fest an der Wand befestigtes Element das Messband verschiebbar führt und eine Referenzmarkierung über die Kodierung des Messbandes zum Kalibrieren des Messbandes einblendet. Die Definition bestimmter Positionen im Aufzug, die sogenannte Kopierung, wie Schachtende, Türzonen, Türniveau, wird wie bekannt mit Fahnen oder Nocken an der Wand des Aufzugsschachts festgelegt und mit entsprechenden Sensoren an der Aufzugskabine detektiert. Aus der EP 2 842 899 A1 geht eine Aufzugsanlage nach dem Oberbegriff des Anspruchs 1 hervor.

Es ist Aufgabe der Erfindung, eine verbesserte Aufzugsanlage bereit zu stellen.

Diese Aufgabe wird, ausgehend von einer Aufzugsanlage der eingangs genannten Art, durch eine Aufzugsanlage nach Anspruch 1 gelöst. Vorteilhafte Ausgestaltungen sind in den weiteren abhängigen Ansprüchen angegeben.

Die erfindungsgemäße Aufzugsanlage ist eine Aufzugsanlage mit einer Aufzugskabine in einem Aufzugsschacht und mit einem Messband im Aufzugsschacht zur Positionsbestimmung der Aufzugskabine im Aufzugsschacht. Das Messband ist vertikal im Aufzugsschacht angeordnet und weist eine optische Kodierung zur Längenmessung auf. Am Messband ist mindestens ein Markierungselement angeordnet das eine optische Markierung aufweist. Das Markierungselement ist fest am Messband angeordnet. An der Aufzugskabine ist eine Sensoreinrichtung befestigt die eine Beleuchtungsquelle und einen Sensor umfasst, die ein Detektionsfeld zum Detektieren des Messbandes ausbilden. Die Aufzugsanlage umfasst eine Auswertungseinrichtung zur Dekodierung der Kodierungen im Detektionsfeld und eine Steuereinrichtung zur Steuerung der Aufzugsanlage in Abhängigkeit der Kodierung und/oder der Position des mindestens einen Markierungselements am Messband.

Die erfindungsgemässe Aufzugsanlage kann den Vorteil ausbilden, dass die Markierungselemente spezielle Positionen im Aufzugschacht anzeigen können und dadurch separate Markierungseinrichtungen und Sensoren zur Positionsangabe (Kopierung) entfallen können. Die Markierungselemente sind schnell und sauber zu montieren, einfach zu justieren, preiswert und müssen nicht an die Wand gebohrt und geschraubt werden. Die Markierungselemente erlauben einen analogen Ablauf bei der Montage wie bei der vorbekannten Kopierung nämlich Vermessen und Befestigen, was den Aufwand zur Umschulung des Montagepersonals reduziert.

Vorzugsweise ist das Markierungselement verschiebefest, insbesondere kraftschlüssig oder stoffschlüssig am Messband befestigt. Dies kann den Vorteil ausbilden, dass die Position zuverlässig zugeordnet ist.

Vorzugsweise überdeckt die Kodierung des Markierungselements die Kodierung des Messbandes. Dies kann den Vorteil ausbilden, dass die Sensoreinrichtung das Markierungselement zuverlässig detektiert und der Detektionsbereich nicht vergrössert werden muss.

Erfindungsgemäß weist die Kodierung des Markierungselements das gleiche Codeformat wie das Messband auf. Dies kann die Dekodierung des Markierungselements vereinfachen und ebenso die Produktion des Markierungselements verbilligen. Ferner entspricht die Kodierung des Markierungselements erfindungsgemäß einer Längenangabe des Codeformats des Messbands. Dies kann die Produktion des Markierungselements weiter verbilligen, da Reststücke des Messbandes für den Code des Markierungselements verwendet werden können. Dabei liegt der Wert der Kodierung des Markierungselements erfindungsgemäß ausserhalb des Längenbereichs des Messbands, insbesondere oberhalb, insbesondere oberhalb 1 km oder 1,5 km. Dies kann die Zuverlässigkeit des Systems weiter erhöhen, da die Kodes der Markierungselemente sicher von den Längenangaben des Messbandes unterschieden werden können.

Vorzugsweise ist die Kodierung des Messbands aus aufeinanderfolgenden Positionsmustern, insbesondere 2D-Codes gebildet. Dies kann den Vorteil ausbilden, dass die Kodierung eine hohe Auflösung aufweist und zuverlässig detektiert werden kann.

Positionsmuster sind diejenigen kleinsten Einheiten des Codes, die einen Zahlenwert repräsentieren. Beispielsweise besteht das Positionsmuster aus einem Muster aus 8 x 3 schwarzen oder weissen Quadraten die ein 27-bit Zahlenwert ergeben. Die Kodierung des Messbands kann dabei durch eine nahtlose Aneinanderreihung der Positionsmuster gebildet sein.

Vorzugsweise ist die Kodierung des Markierungselements aus einem oder mehreren Positionsmustern gebildet welche in Format und Anordnung den Positionsmustern des Messbands gleichen. Dies kann den Vorteil ausbilden, dass der Code eine hohe Auflösung aufweist und zuverlässig detektiert werden kann.

Vorzugsweise ist die Kodierung des Markierungselementes verschieden vom Wert Null. Vorzugsweise weist das oder die Positionsmuster des Markierungselements nicht den Wert Null auf. Vorzugsweise ist die Kodierung und/oder das oder die Positionsmuster. des Markierungselementes nicht aus ausschliesslich aus einer Farbe gebildet, insbesondere nicht aus ausschliesslich aus weissen oder schwarzen Elementen.

Vorzugsweise ist das Markierungselement als Klipp zum Aufschieben über das Messband ausgebildet und/oder plombiert zum Nachweis eines Austauschs ausgebildet und/oder als Klebestreifen zum Aufkleben auf das Messband ausgebildet. Dies kann den Vorteil ausbilden, dass das Markierungselement einfach zu montieren ist und/oder erhöhten Sicherheitsanforderungen genügt.

Vorzugsweise weist das Markierungselement einen Kennzeichnungsbereich zur sinnlichen Identifikation seiner Eigenschaft auf, insbesondere durch Farbe, Grösse, Form oder Aufschrift. Dies kann den Vorteil ausbilden, dass das Markierungselement vom Montagepersonal nicht verwechselt wird und im Aufzugschacht auch aus gewisser Entfernung in seiner spezifischen Eigenschaft eindeutig identifiziert werden kann.

Vorzugsweise ist die Steuerungseinrichtung dazu ausgebildet, den unterschiedlichen Kodierungen der Markierungselemente unterschiedliche Eigenschaften zuzuordnen, insbesondere eine zulässige Maximalgeschwindigkeit, oberes oder unteres Schachtende, obere oder untere Türzone, oder Türniveau, insbesondere durch eine Tabelle in einem nicht flüchtigen Speicher in der Steuerungseinrichtung. Dies kann den Vorteil ausbilden, dass entsprechende Markierungselemente die zulässige Maximalgeschwindigkeit und die genannten Positionen im Aufzug eindeutig definieren und/oder markieren können.

Vorzugsweise weist die Aufzugsanlage am Messband mehrere Markierungselemente mit unterschiedlichen Kodierungen auf, deren Kodierung einer Kodierung entspricht, für die in der Steuereinrichtung eine Eigenschaft zugeordnet ist.

Vorzugsweise weist das Messband der Aufzugsanlage ein Markierungselement für die zulässige Maximalgeschwindigkeit der Aufzugskabine auf, das insbesondere unter dem Markierungselement für das untere Schachtenden angeordnet ist.

Beispielsweise bedeuten die folgenden Längenwerte der Kodierung eines Markierungselements die folgende zulässige Maximalgeschwindigkeit der Aufzugsanlage:

| | |
|---|---|
| 1500000 - 1500010 mm : | Maximalgeschwindigkeit 1,0 m/s |
| 1500010 - 1500020 mm : | Maximalgeschwindigkeit 1,5 m/s |
| 1500020 - 1500030 mm : | Maximalgeschwindigkeit 2,0 m/s |
| 1500030 - 1500040 mm : | Maximalgeschwindigkeit 2,5 m/s |

Damit ist die Grundlage der Definition der zulässigen Maximalgeschwindigkeit, nämlich das entsprechende Markierungselement am Messband, mit dem Aufzugsschacht verbunden ist und nicht mit der Steuerung. Dies kann zusammen mit einer entsprechenden Kennzeichnung im Kennzeichnungsbereich den Vorteil ausbilden, dass der für diesen Aufzug zur Anwendung kommende Wert der zulässigen Maximalgeschwindigkeit auch einfach im Aufzugsschacht identifiziert werden kann. Dies kann die Aufzugssicherheit erhöhen.

Vorzugsweise weist die Aufzugsanlage an bestimmten Positionen am Messband Markierungselemente mit einer bestimmten Eigenschaft für diese Positionen im Aufzugschacht auf, insbesondere für das obere und untere Schachtende, die oberen und unteren Inspektionslimits, die oberen und unteren Türzonen und/oder die Tümiveaus.

Für Markierungselemente die für Positionsangaben vorgesehen sind bedeuten beispielsweise die folgenden Längenwerte der Kodierungen der Markierungselemente die folgende Eigenschaft:

| | |
|---|---|
| 1500410 - 1500420 mm : | Endschalter oben (Final Limit Top) |
| 1500430 - 1500440 mm : | Endschalter unten (Final Limit Bottom) |
| 1500450 - 1500460 mm : | Inspektionslimit oben (Inspection Limit Top) |
| 1500470 - 1500480 mm : | Inspektionslimit unten (Inspection Limit Bottom) |
| 1500490 - 1500500 mm : | erweitertes Inspektionslimit oben (ILTE) |
| 1500510 - 1500520 mm : | erweitertes Inspektionslimit unten (ILBE) |

Vorzugsweise ordnet die Steuereinrichtung im Auslieferungszustand den unterschiedlichen Eigenschaften keine Position zu. Dies kann den Vorteil aufweisen, dass die Steuerung keine falschen Positionsangaben mitbringt.

Vorzugsweise begrenzt die Steuereinrichtung im Auslieferungszustand die Geschwindigkeit der Aufzugskabine auf eine bestimmte Servicegeschwindigkeit, die vorzugsweise geringer als die zulässige Maximalgeschwindigkeit im Normalbetriebszustand ist und mit besonderem Vorzug 0,6 m/s beträgt. Dies kann den Vorteil aufweisen, dass die Aufzugsanlage vor der vollständigen Inbetriebnahme in einem Sicherheitsmodus verbleibt.

Vorzugsweise fährt die Aufzugskabine in einer ersten Lernfahrt zum Markierungselement für die Maximalgeschwindigkeit, dort detektiert die Sensoreinrichtung dessen Kodierung, die Auswerteeinrichtung ermittelt den Wert der Kodierung und die Steuereinrichtung speichert den ermittelten Wert als zulässige Maximalgeschwindigkeit in einem Speicher.

Damit bleibt die Grundlage der Definition der Maximalgeschwindigkeit, nämlich das entsprechende Markierungselement am Messband, mit dem Aufzugsschacht verbunden ist und nicht mit der Steuerung. Dies kann den Vorteil ausbilden, dass bei einem Neueinbau oder Auswechseln der Steuereinrichtung keine falsche Maximalgeschwindigkeit verwendet wird. Dies kann die Aufzugssicherheit erhöhen.

Vorzugsweise speichert die Steuereinrichtung bei einer zweiten Lernfahrt der Aufzugskabine über alle Markierungselemente für Positionsangaben, deren ihrer Kodierung zugeordnete Eigenschaften und die detektierte Position der Markierungselemente auf dem Messband in einem Speicher und/oder gibt die Aufzugsanlage für den Normalbetrieb frei. Dies erlaubt eine einfache Übernahme der Geometrie des Aufzugschachtes in die Steuerung.

Vorzugsweise steuert die Steuereinrichtung im Normalbetriebszustand die Aufzugsanlage in Abhängigkeit von der in ihrem Speicher gespeicherten Maximalgeschwindigkeit, Positionen und zugeordneten Eigenschaften welche aus den Markierungselementen eingelesen wurden.

Das erfindungsgemässe Markierungselement ist ein Markierungselement mit einem Befestigungselement zur Befestigung an ein Messband und mit einer optischem Kodierung, wobei das Markierungselement dazu ausgebildet ist, nach der Befestigung am Messband mit seiner Kodierung die Kodierung des Messbands zu überdecken und wobei die Kodierung einer Längenangabe von über 50 m, insbesondere von über 100 m, insbesondere von über 500 m, insbesondere von über 1 km, insbesondere von über 1,5 km entspricht.

Dies kann den Vorteil ausbilden, dass die Kodierung eines Markierungselementes nicht mit einer Längenposition des Messbandes verwechselt wird. Dies kann die Sicherheit der Aufzugsanlage erhöhen.

Weitere Merkmale der Erfindung sind in den Zeichnungen angegeben.

Die jeweils genannten Vorteile können sich auch für Merkmalskombinationen realisieren in deren Zusammenhang sie nicht genannt sind.

### Überblick über die Zeichnungen:

Ausführungsbeispiele der Erfindung sind in den Zeichnungen dargestellt und werden im Folgenden näher erläutert. Gleiche Bezugszeichen in den einzelnen Figuren bezeichnen dabei einander entsprechende Elemente. Es zeigen:
- Fig. 1: Markierungselement am Messband einer Aufzugsanlage
- Fig. 2: Seitenansicht des Markierungselements mit Messband
- Fig. 3: Seitenschnitt des Markierungselementes mit Messband
- Fig. 4: Alternatives Markierungselement mit Messband

### Detaillierte Beschreibung der Zeichnungen:

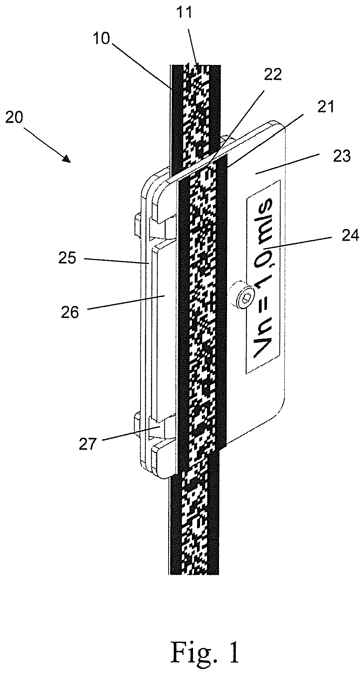

Fig. 1 zeigt ein Markierungselement 20 an einem Messband 10 einer Aufzugsanlage.

Das Messband 10 ist mindestens über den gesamten Fahrweg der Aufzugskabine durchgehend von oben bis unten im Aufzugschacht angeordnet. Das Messband 10 weist auf seiner Vorderseite zwei schwarze Randstreifen auf zwischen denen eine optische Kodierung 11 aufgebracht ist. Die Kodierung besteht aus abstandslos benachbarten Positionsmustern aus einer Matrix von 8 x 3 schwarzen oder weissen Quadraten, die einen 27-bit Wert repräsentieren, der eine Längenposition zur Längenmessung und damit zur Positionsbestimmung der Aufzugskabine darstellt.

Das Markierungselement 20 umfasst das Messband 10 verschiebefest. Das Markierungsteil besteht aus einem Rückenteil hinter dem Messband und einem Vorderteil über der Vorderseite des Messbands. Auf der Vorderseite des Markierungselements ist ein Abschnitt 21 des Messbandes so aufgebracht, dass er in einer Linie mit dem Messband angeordnet ist. Der Messbandabschnitt 21 weist eine Kodierung 22 auf, die ebenso strukturiert ist wie das Messband. Die Kodierung 22 des Messbandabschnitts 21 des Markierungselements 20 weist aufeinander folgende Positionsmuster für aufeinanderfolgende Längenwerte von jenseits 1,5 km auf. Das Markierungselement weist einen Kennzeichnungsbereich 23 auf, auf dem die seiner Kodierung zugewiesenen Eigenschaft als Kennzeichnung 24 angeschrieben ist. In der gezeigten Figur handelt es sich um eine Angabe zur zulässigen Maximalgeschwindigkeit der Aufzugsanlage von 1,0 m/s.

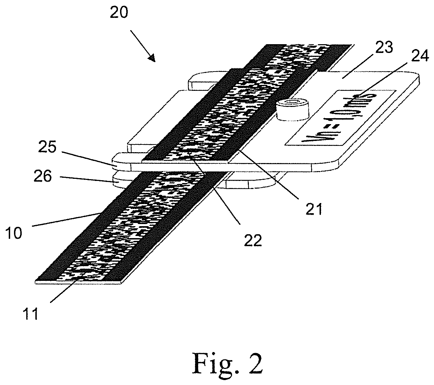

Fig. 2 zeigt das Markierungselement 20 mit dem Messband 10 in seitlicher Perspektive. Es ist zu erkennen, dass die Kodierung 22 des Messbandabschnitts 21 des Markierungselements 20 die Kodierung 11 des Messbandes 10 genau überdeckt.

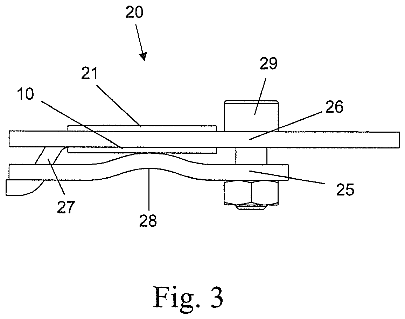

Fig. 3 zeigt das Markierungselement 20 mit dem Messband 10 im Seitenschnitt. Das Markierungselement weist ein Vorderteil 26 auf, das die Vorderseite des Messbandes 10 und dessen Kodierung in einem Abschnitt überdeckt und das den Messbandabschnitt 21 trägt. Der Messbandabschnitt hat genau die Läge der Überdeckung des Messbandes durch das Markierungselement. Das Rückenteil 25 des Markierungselements wird von einem Verbindungssteg 27 und einer Schraube 29 am Vorderteil 26 gehalten und umfasst das Messband 10 von hinten. Das Rückenteil weist ein Federelement 28 auf das das Messband 10 verschiebefest gegen das Vorderteil drückt 26.

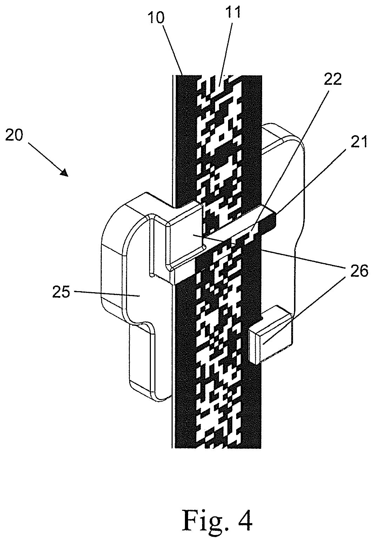

Fig. 4 zeigt eine alternative Ausführung eines Markierungselements 20. Das alternative Markierungselement 20 besteht aus einem Rückenteil 25 und aus einem Vorderteil 26, das aus 2 seitlich teilweise über das Messband 10 greifende Fixierelemente und einem vollständig über das Messband reichenden Fingersteg. Das alternative Markierungselement 20 ist als Klipp ausgebildet und kann durch Eindrehen um das Messband 10 aufgeschoben werden und hält am Messband 10 durch selbstständiges Verklemmen verschiebefest ohne Verschraubung fest. Der Fingersteg des Vorderteils 26 trägt einen Messbandabschnitt 21 mit einer Kodierung 22 von nur der Länge eines Positionsmusters. Das Positionsmuster ist im gleichen Format aufgebaut wie die Positionsmuster des Messbandes 10 und repräsentiert einen Längenwert von jenseits 1,5 km.

### Bezugszeichenliste:

- 10: Messband
- 11: Kodierung

- 20: Markierungselement
- 21: Messbandabschnitt
- 22: Kodierung
- 23: Kennzeichnungsbereich
- 24: Kennzeichnung
- 25: Rückenteil
- 26: Vorderteil
- 27: Verbindungsteg
- 28: Federelement
- 29: Schraube

## Patentansprüche

1. Aufzugsanlage mit einer Aufzugskabine in einem Aufzugsschacht
- mit einem Messband (10)
- zur Positionsbestimmung der Aufzugskabine im Aufzugsschacht
- das vertikal im Aufzugsschacht angeordnet ist
- und eine optische Kodierung (11, 22) zur Längenmessung aufweist,
- mit mindestens einem Markierungselement (20)
- das am Messband (10) angeordnet ist
- und eine optische Kodierung (11, 22) aufweist,
- mit einer Sensoreinrichtung
- die an der Aufzugskabine befestigt ist
- und eine Beleuchtungsquelle und einen Sensor umfasst
- die ein Detektionsfeld ausbilden zum Detektieren des Messbandes (10),
- mit einer Auswertungseinrichtung
- zur Dekodierung der Kodierungen (11, 22) im Detektionsfeld, und
- mit einer Steuereinrichtung
- zur Steuerung der Aufzugsanlage in Abhängigkeit des mindestens einen Markierungselements (20)
wobei
- das Markierungselement (20) fest am Messband (10) angeordnet ist,
**dadurch gekennzeichnet, dass** die Kodierung (11, 22) des Markierungselements (20)
- das gleiche Codeformat wie das Messband (10) aufweist und
- einer Längenangabe des Codeformats des Messbands (10) entspricht und
- im Wert ausserhalb des Längenbereichs des Messbands (10) liegt, insbesondere oberhalb, insbesondere oberhalb 1 km oder 1,5 km.

2. Aufzugsanlage nach Anspruch 1, **dadurch gekennzeichnet, dass** das Markierungselement (20) verschiebefest, insbesondere kraftschlüssig oder stoffschlüssig am Messband (10) befestigt ist.

3. Aufzugsanlage nach einem der vorhergehenden Ansprüche,
**dadurch gekennzeichnet, dass** die Kodierung (11, 22) des Markierungselements (20) die Kodierung (11, 22) des Messbandes (10) überdeckt.

4. Aufzugsanlage nach einem der vorhergehenden Ansprüche,
**dadurch gekennzeichnet, dass** die Kodierung (11, 22) des Messbands (10) aus mehreren aufeinanderfolgenden Positionsmustern, insbesondere 2D-Codes gebildet ist.

5. Aufzugsanlage nach einem der vorhergehenden Ansprüche,
**dadurch gekennzeichnet, dass** die Kodierung (11, 22) des Markierungselements (20) aus einem oder mehreren Positionsmustern gebildet ist welche in Format und Anordnung den Positionsmustern des Messbands (10) gleichen.

6. Aufzugsanlage nach einem der vorhergehenden Ansprüche,
**dadurch gekennzeichnet, dass** das Markierungselement (20)
- als Klipp zum Aufschieben über das Messband (10) ausgebildet ist und/oder
- plombiert zum Nachweis eines Austauschs ausgebildet ist und/oder
- als Klebestreifen zum Aufkleben auf das Messband (10) ausgebildet ist.

7. Aufzugsanlage nach einem der vorhergehenden Ansprüche,
**dadurch gekennzeichnet, dass** das Markierungselement (20) einen Kennzeichnungsbereich zur sinnlichen Identifikation seiner Eigenschaft aufweist, insbesondere durch Farbe, Grösse, Form oder Aufschrift.

8. Aufzugsanlage nach einem der vorhergehenden Ansprüche,
**dadurch gekennzeichnet, dass** die Steuerungseinrichtung den unterschiedlichen Kodierungen (11, 22) der Markierungselemente (20) unterschiedliche Eigenschaften zuordnet, insbesondere eine zulässige Maximalgeschwindigkeit, oberes oder unteres Schachtende, obere oder untere Türzone, oder Türniveau, insbesondere durch eine Tabelle in einem nicht flüchtigen Speicher in der Steuerungseinrichtung.

9. Aufzugsanlage nach einem der vorhergehenden Ansprüche,
**dadurch gekennzeichnet, dass** die Aufzugsanlage
- am Messband (10) mehrere Markierungselemente (20) mit unterschiedlichen Kodierungen aufweist deren Kodierung (11, 22) einer Kodierung (11, 22) entspricht für die in der Steuereinrichtung eine Eigenschaft zugeordnet ist und/oder
- am Messband (10) ein Markierungselement (20) für die zulässige Maximalgeschwindigkeit der Aufzugskabine aufweist, das insbesondere unter dem Markierungselement (20) für das untere Schachtenden angeordnet ist und/oder
- an bestimmten Positionen am Messband (10) Markierungselemente (20) mit einer bestimmten Eigenschaft für diese Positionen im Aufzugschacht aufweist, insbesondere für das obere und untere Schachtende, das obere und untere Inspektionslimit, die oberen und unteren Türzonen und/oder die Türniveaus.

10. Aufzugsanlage nach einem der vorhergehenden Ansprüche,
**dadurch gekennzeichnet, dass** die Steuereinrichtung im Auslieferungszustand dazu ausgebildet ist,
- den unterschiedlichen Eigenschaften der Kodierungen (11, 22) keine Position zuzuordnen und/oder
- die Geschwindigkeit der Aufzugskabine auf eine bestimmte Servicegeschwindigkeit zu begrenzen, insbesondere geringer als die zulässige Maximalgeschwindigkeit im Normalbetriebszustand, insbesondere 0.6m/s.

11. Aufzugsanlage nach einem der vorhergehenden Ansprüche,
**dadurch gekennzeichnet, dass** die Steuereinrichtung dazu ausgebildet ist,
- bei einer ersten Lernfahrt der Aufzugskabine zum Markierungselement (20) für die Maximalgeschwindigkeit die aus dessen Kodierung (11, 22) detektierte Maximalgeschwindigkeit in einem Speicher zu speichern und/oder
- bei einer zweiten Lernfahrt über alle Markierungselemente (20) für Positionsangaben, deren ihrem Code zugeordnete Eigenschaft und die zugeordnete detektierte Position der Markierungselemente (20) auf dem Messband (10) in einem Speicher zu speichern und/oder die Aufzugsanlage für den Normalbetrieb freizugeben und/oder
- im Normalbetriebszustand die Aufzugsanlage in Abhängigkeit von der in ihrem Speicher gespeicherten Maximalgeschwindigkeit, Positionen und zugeordneten Eigenschaften zu steuern, welche aus den Markierungselementen (20) eingelesen wurden.

## Claims

1. A lift system with a lift car in a lift shaft
- with a measuring tape (10)
- for determining the position of the lift car in the lift shaft
- which is arranged vertically in the lift shaft
- and having an optical encoding (11, 22) for length measurement,
- with at least one marking element (20)
- that is arranged on the measuring tape (10)
- and having an optical encoding (11, 22),
- with a sensor device
- that is attached to the lift car
- and comprising a lighting source and a sensor
- which forms a detection field for detecting the measuring tape (10),
- with an evaluation device
- for decoding the encodings (11, 22) in the detection field, and
- with a control device
- for controlling the lift system as a function of the at least one marking element (20), wherein
- the marking element (20) is securely arranged on the measuring tape (10), **characterised in that** the encoding (11, 22) of the marking element (20)
- has the same coding format as the measuring tape (10), and
- corresponds to a length specification of the encoding format of the measuring tape (10), and
- the value thereof lies outside the length range of the measuring tape (10), in particular, and in particular 1 km or 1.5 km above.

2. The lift system according to claim 1, **characterised in that** the marking element (20) is non-displaceably, in particular positively connected or integrally attached to the measuring tape (10).

3. The lift system according to one of the preceding claims, **characterised in that** the encoding (11, 22) of the marking element (20) overlays the encoding (11, 22) of the measuring tape (10).

4. The lift system according to one of the preceding claims, **characterised in that** the encoding (11, 22) of the measuring tape (10) is formed from several sequential position patterns, in particular 2D codes.

5. The lift system according to one of the preceding claims, **characterised in that** the encoding (11, 22) of the marking element (20) is formed from one or several position patterns which are the same in terms of format and arrangement as the position patterns of the measuring tape (10).

6. The lift system according to one of the preceding claims, **characterised in that** the marking element (20)
- is formed as a clip for sliding over the measuring tape (10) and/or
- is formed to be sealed for the detection of replacement and/or
- is formed as adhesive strips for adhering to the measuring tape (10).

7. The lift system according to one of the preceding claims, **characterised in that** the marking element (20) has a labelling area for the sensory identification of the properties thereof, in particular colour, size, shape, or messages.

8. The lift system according to one of the preceding claims, **characterised in that** the control device assigns different properties to the different encodings (11, 22) of the marking element (20), in particular a maximum permissible speed, upper or lower ends of the shaft, upper or lower door zones, or door levels, in particular through a table in a non-volatile memory in the control device.

9. The lift system according to one of the preceding claims, **characterised in that** the lift system
- has several marking elements (20) with different encodings on the measuring tape (10), the encoding (11, 22) thereof corresponding to an encoding (11, 22) to which a property is assigned in the control device, and/or
- has a marking element (20) on the measuring tape (10) for the maximum permissible speed of the lift car, that in particular is arranged under the marking element (20) for the lower end of the shaft, and/or
- has marking elements (20) at certain positions on the measuring tape (10) with a certain property for these positions in the lift shaft, in particular for the upper and lower ends of the lift shaft, the upper and lower inspection limits, the upper and lower door zones and/or door levels.

10. The lift system according to one of the preceding claims, **characterised in that** the control device in the as-delivered state is formed such that
- the different properties of the encodings (11, 22) are not assigned to any position, and/or
- the speed of the lift car is limited to a certain service speed, in particular less than the maximum permissible speed under normal operating conditions, in particular 0.6 m/s.

11. The lift system according to one of the preceding claims, **characterised in that** the control device is formed such that
- during a first trial run of the lift car to the marking element (20) for the maximum speed, the maximum speed detected by the encoding (11, 22) thereof is stored in a memory, and/or
- during a second trial run of the lift car to the marking element (20) for the position information, the property assigned to the code thereof and the assigned detected position of the marking element (20) on the measuring tape (10) are stored in a memory, and/or the lift car is released for normal operation, and/or
- under normal operating conditions, the lift system is controlled as a function of the maximum speed, positions, and assigned properties stored in the memory thereof, which are read in from the marking element (20).

## Revendications

1. Système d'ascenseur comprenant une cabine dans une cage d'ascenseur
- comprenant une bande de mesure (10)
- destinée à déterminer la position de la cabine dans la cage d'ascenseur
- qui est disposée verticalement dans la cage d'ascenseur
- et présente un codage optique (11, 22) pour la mesure longitudinale,
- au moins un élément de marquage (20)
- qui est disposé sur la bande de mesure (10)
- et présente un codage optique (11, 22),
- et un dispositif de détection
- qui est fixé à la cabine d'ascenseur
- et comprend une source d'éclairage et un capteur
- qui forment un champ de détection pour détecter la bande de mesure (10),
- et un dispositif d'évaluation
- destiné à décoder les codages (11, 22) dans le champ de détection, et
- un dispositif de commande
- destiné à commander le système d'ascenseur en fonction de l'au moins un élément de marquage (20)
- l'élément de marquage (20) étant disposé à demeure sur la bande de mesure (10), **caractérisé en ce que** le codage (11, 22) de l'élément de marquage (20)
- présente le même format de code que la bande de mesure (10) et
- correspond à une indication de longueur du format de code de la bande de mesure (10) et
- en valeur se situe en dehors de la zone de longueur de la bande de mesure (10), en particulier au-dessus, en particulier au-dessus de 1 km ou 1,5 km.

2. Système d'ascenseur selon la revendication 1, **caractérisé en ce que** l'élément de marquage (20) est fixé solidaire en coulissement, en particulier à force ou par liaison de matière sur la bande de mesure (10).

3. Système d'ascenseur selon l'une des revendications précédentes, **caractérisé en ce que** le codage (11, 22) de l'élément de marquage (20) recouvre le codage (11, 22) de la bande de mesure (10).

4. Système d'ascenseur selon l'une des revendications précédentes, **caractérisé en ce que** le codage (11, 22) de la bande de mesure (10) est formé à partir de plusieurs motifs de position consécutifs, en particulier des codes 2D.

5. Système d'ascenseur selon l'une des revendications précédentes, **caractérisé en ce que** le codage (11, 22) de l'élément de marquage (20) est formé à partir d'un ou de plusieurs motifs de position qui ressemblent quant à leur format et leur disposition aux motifs de position de la bande de mesure (10).

6. Système d'ascenseur selon l'une des revendications précédentes, **caractérisé en ce que** l'élément de marquage (20)
- est conçu sous la forme d'un clip à glisser sur la bande de mesure (10) et/ou
- est plombé pour détecter un échange et/ou
- est conçu sous la forme d'une bande adhésive à coller sur la bande de mesure (10).

7. Système d'ascenseur selon l'une des revendications précédentes, **caractérisé en ce que** l'élément de marquage (20) présente une zone de marquage pour l'identification sensorielle de sa propriété, en particulier par sa couleur, grandeur, forme ou inscription.

8. Système d'ascenseur selon l'une des revendications précédentes, **caractérisé en ce que** le dispositif de commande attribue aux différents codages (11, 22) de l'élément de marquage (20) différentes propriétés, en particulier une vitesse maximale autorisée, une extrémité de cage supérieure ou inférieure, une zone de porte supérieure ou inférieure, ou un niveau de porte, en particulier par un tableau dans une mémoire non volatile du dispositif de commande.

9. Système d'ascenseur selon l'une quelconque des revendications précédentes, **caractérisé en ce que** l'installation d'ascenseur
- sur la bande de mesure (10) présente plusieurs éléments de marquage (20) ayant différents codages dont le codage (11, 22) correspond à un codage (11, 22) à qui est attribué une propriété dans le dispositif de commande et/ou
- sur la bande de mesure (10) présente un élément de marquage (20) pour la vitesse maximale autorisée de la cabine d'ascenseur qui est disposé en particulier sous l'élément de marquage (20) pour l'extrémité de cage inférieure et/ou
- présente dans des positions déterminées sur la bande de mesure (10) des éléments de marquage (20) ayant une propriété déterminée pour lesdites positions dans la cage d'ascenseur, en particulier pour l'extrémité supérieure et inférieure, la limite d'inspection supérieure ou inférieure, les zones de porte supérieure ou inférieure et/ou les niveaux de porte.

10. Système d'ascenseur selon une des revendications précédentes, **caractérisé en ce que** le dispositif de commande est conçu dans l'état d'acheminement pour
- n'attribuer aux différentes propriétés des codages (11, 22) aucune position et/ou
- pour limiter la vitesse de la cabine d'ascenseur à une vitesse de service déterminée, en particulier inférieure à la vitesse maximale autorisée dans l'état de fonctionnement normal, en particulier 0,6 m/s.

11. Système d'ascenseur selon une des revendications précédentes, **caractérisé en ce que** le dispositif de commande est conçu pour
- lors d'une première course d'apprentissage de la cabine d'ascenseur vers l'élément de marquage (20) pour la vitesse maximale, mémoriser dans une mémoire la vitesse maximale détectée par son codage (11, 22) et/ou
- lors d'une seconde course d'apprentissage de la cabine d'ascenseur sur tous les éléments de marquage (20), enregistrer dans une mémoire les indications de position, dont la propriété attribuée à son code et la position détectée attribuée de l'élément de marquage (20) sur la bande de mesure (10) et/ou mettre en service le système d'ascenseur pour le fonctionnement normal et/ou
- en fonctionnement normal commander le système d'ascenseur en fonction de la vitesse maximale, des positions et des propriétés attribuées enregistrées dans sa mémoire, qui ont été lues à partir des éléments de marquage (20).
